# EUROPÄISCHE PATENTSCHRIFT

(11) **EP 1 763 454 B1**
(45) Veröffentlichungstag und Bekanntmachung des Hinweises auf die Patenterteilung: **09.07.2008**
(21) Anmeldenummer: 05706899.1
(22) Anmeldetag: 15.01.2005
(51) Int. Cl.: B60R 16/02, H04L 12/40, H04L 29/14

(54) **REDUNDANTES DATENBUSSYSTEM**
REDUNDANT DATA BUS SYSTEM
SYSTEME REDONDANT DE BUS DE DONNEES

(30) Priorität: 06.07.2004 DE 102004032779
(43) Veröffentlichungstag der Anmeldung: 21.03.2007
(73) Patentinhaber: Daimler AG, 70327 Stuttgart (DE)
(72) Erfinder: ARMBRUSTER, Michael, 70569 Stuttgart (DE); PAASCHE, Sascha, 69115 Heidelberg (DE); REICHEL, Reinhard, 78333 Stockach (DE); SCHWARZHAUPT, Andreas, 76829 Landau (DE); SPIEGELBERG, Gernot, 93077 Bad Abbach (DE); SULZMANN, Armin, 69115 Heidelberg (DE)
(86) Internationale Anmeldenummer: PCT/EP2005/000375
(87) Internationale Veröffentlichungsnummer: WO 2006/002695

(56) Entgegenhaltungen:
- EP-A- 0 590 175
- EP-A- 0 732 654
- EP-A- 1 359 057
- GB-A- 2 345 153

## Beschreibung

Die Erfindung betrifft ein redundantes Datenbussystem mit zwei Datenbussen, zwischen denen mindestens zwei fehlersichere Steuergeräte angekoppelt sind, wobei beide Datenbusse mit dem gleichen Datenbusprotokoll, bspw. ein synchrones CAN oder Flexray-Protokoll, bei im Wesentlichen der gleichen Übertragungsfrequenz arbeiten. Sicherheitsrelevante Steuernachrichten werden über beide Datenbusse parallel übertragen und in den Steuergeräten verarbeitet, wobei jedes der Steuergeräte eine eigene Steuerungsaufgabe erfüllt, die über eine zugeordnete Steuerungssoftware abgearbeitet wird.

Es sind redundante Datenbussysteme bekannt, die üblicherweise bei sicherheitskritischen Anwendungen im Kraftfahrzeug oder in Verkehrsflugzeugen,eingesetzt werden. Ein derartiges Datenbussystem ist in der Zeitschrift "Technische Rundschau" Nr. 18, 2001, auf den Seiten 42 bis 45 offenbart. Der FlexRay-Datenbus wurde zur elektrischen Ansteuerung der Lenkung, Bremse oder der Sicherheitssysteme entwickelt. Wegen der Sicherheitsaspekte müssen die wichtigsten Systeme doppelt ausgeführt sein und an beiden Kanälen, d. h. an beiden separaten FlexRay-Datenbussträngen, angeschlossen sein. Weniger sicherheitskritische Sensoren oder Aktuatoren können an einem Steuergerät angeschlossen sein, welches nur mit einem Datenbusstrang verbunden ist. Das FlexRay-Datenbussystem weist zwei separate Datenbusleitungen auf, die Nachrichten im selben Datenprotokoll übertragen. Sicherheitskritische Steuergeräte hängen an beiden Datenbussen und können deswegen beide Nachrichtenströme auswerten und ggf. vergleichen. Unterscheiden sich die Nachrichten für ein Steuergerät, die jeweils von den unterschiedlichen Datenbussen eingehen, so kann ein Fehler erkannt werden. Nähere Informationen zu derartigen Fehlererkennungsverfahren sind jedoch nicht dargestellt.

Die US 5,694,542 zeigt ebenfalls ein redundantes Datenbussystem, wobei dort jedes Steuergerät gleichzeitig an beiden Datenbussträngen des Datenbussystems angeschlossen ist. Um sicherzustellen, dass die angeschlossenen Steuergeräte funktionsfähig sind, wird in der Nachricht jedes Steuergeräts ein Membership-Feld vorgesehen, in dem im Fehlerfall die Information für die anderen Steuergeräte gespeichert wird, dass das Steuergerät ausgefallen ist.

Die GB 2 345 153 A offenbart, gemäss dem Oberbegriff des Anspruchs 1, eine Mikrorechneranordnung mit zwei voneinander unabhängigen Mikrocontrollern. Der erste Mikrocontroller steuert die Aktoren einer Bremsanlage, während der zweite Mikrocontroller eine Diagnosefunktion hat und ein Busmonitoring durchführt. Wird aufgrund des Busmonitoring oder einem direkten Datenaustausch zwischen den Mikrocontrollern ein Fehler erkannt, so führt der zweite Mikrocontroller eine Notkommunikation durch. Der zweite Mikrocontroller dient als Schattenrechner, der im Fehlerfall bestimmte Funktionen des ersten Mikrocontrollers übernehmen kann. Die Mikrorechneranordnung, bzw. deren Mikrocontroller sind an einem einzigen Datenbus angekoppelt. Dieser Datenbus ist als fehlertolleranter Zweileiterdatenbus ausgeführt.

Die EP 0 732 654 A1 offenbart ein Verfahren zur fehlertoleranten Kommunikation unter hohen Echtzeitbedingungen. Hierbei ist eine Doppelbusarchitektur vorgesehen, wobei ein Knoten mit zwei Mikrocontrollern zwischen zwei CAN-Datenbussen angeordnet ist. Jeder CAN-Datenbus wiederum ist ein Zweileiterdatenbus. Jeder Datenbus wird im Fehlerfall als Watchdog-Datenbus verwendet, um im Fehlerfall diesen an die übrigen Teilnehmer mitzuteilen. Die Steuerfunktion wird dabei nicht an den anderen Mikrocontroller übergeben, sondern es wird die fehlerhafte Nachricht überschrieben.

Die Aufgabe der vorliegenden Erfindung besteht darin, die Entscheidungsstruktur im Datenbussystem derart weiterzubilden, dass das Datenbussystem trotz eines fehlerhaften Steuergeräts funktionsfähig bleibt.

Diese Aufgabe wird durch die Merkmale des unabhängigen Anspruchs 1 gelöst. Danach sind in jedem Steuergerät zwei voneinander unabhängig arbeitende Mikrorechner vorgesehen, die sowohl die Steuerungssoftware der ersten als auch der zweiten Steuerungsaufgabe aufweisen, so dass bei einem Ausfall eines Steuergerätes die Steuerungsaufgabe durch das andere Steuergerät mit übernommen werden kann. Eine Datenschnittstelle ist innerhalb des Steuergeräts zwischen den beiden Mikrorechnern angeordnet und über diese sind die aus den sicherheitsrelevanten Steuernachrichten berechneten Ergebnisdaten austauschbar und miteinander vergleichbar. Es ist ein Entscheidungsmittel vorgesehen, das aufgrund des Vergleichs der Ergebnisdaten entscheidet, welcher Mikrorechner bzw. welches Steuergerät eine Steuerungsaufgabe durchführt.

Erfindungsgemäß ist ein Datenbussystem mit Steuergeräten, beispielsweise zur Ansteuerung des Motors, des Getriebes und der Lenkung vorgesehen. Die Steuerdaten werden über das Datenbussystem in Form von elektronischen Nachrichten übertragen und ein Aktuator, beispielsweise ein Elektromotor, bewirkt dann die eigentliche Lenkung der Räder. Es sind Steuergeräte am Datenbussystem vorgesehen, die lediglich mit einem Datenbus verbunden sind, und solche, die als Dual-Rechner bezeichnet werden und mit beiden Datenbussen des Datenbussystems in Verbindung stehen. Ein Datenbus ist in diesem Sinne ein einfacher LIN-, CAN-, oder FlexRay-Datenbus. Dabei kann jeder Datenbus jeweils zwei Datenbusleitungen aufweisen, wie dies beispielsweise beim CAN üblich ist. Bevorzugt wird ein zeitsynchrones Kommunikationsprotokoll auf den beiden Datenbussen des Datenbussystems eingesetzt. Für die einzelnen Nachrichten sind dann Zeitschlitze vorgesehen, wobei jeder Zeitschlitz einem Steuergerät oder einem Aktuator bzw. Sensor zugeordnet ist. Auf diese Weise ist gewährleistet, dass bei zyklisch wiederkehrenden Sendezeiten für jedes Steuergerät und bei Ausbleiben der vorgesehenen Nachricht festgestellt werden kann, dass das Steuergerät ausgefallen ist. Es können in dem zeitsynchronen Datenbusprotokoll noch ein oder mehrere Zeitschlitze vorgesehen sein, in dem auch ereignisgesteuerte Nachrichten gesendet werden können, d. h. hier werden zyklisch nicht wiederkehrende Nachrichten übertragen.

Das Datenbussystem ist redundant ausgelegt. Dazu sind zwei Datenbusse vom selben Typ vorgesehen, auf denen das gleiche Kommunikationsprotokoll abläuft. Die Nachrichten werden bei gleicher Frequenz und mit übereinstimmenden Zeitschlitz-Sequenzen versehen. Lediglich in dem Zeitschlitz für ereignisgesteuerte Nachrichten und in den Zeitschlitzen für Steuergeräte, die nur an einem der Datenbusse angekoppelt sind, unterscheiden sich beispielsweise die Nachrichtenprotokolle. Sensoren, Aktuatoren und Steuergeräte mit sicherheitsrelevanten Aufgaben sind als Duplex, d. h. mit an sich gleichen Hardwaremodulen doppelt ausgelegt. Die Sicherheitskomponenten mit doppelter Auslegung haben den Vorteil, dass die über die beiden Datenbusse eingehenden übereinstimmenden Nachrichten in jeder der Duplex-Hardwaremodule separat berechnet werden und die Ergebnisse verglichen werden. Bei Übereinstimmung kann von einer ordnungsgemäßen Funktion des Datenbussystems ausgegangen werden. Unterscheiden sich die beiden berechneten Ergebnisse, so führt das Datenbussystem entsprechend einer vorgegebenen Fehlerroutine Berechnungen durch. Im Fehlerfall übernimmt dann ein anderes doppelt ausgelegtes Duplex-Steuergerät die Aufgabe oder bei weniger sicherheitskritischen Fehlern kann auch nur einer der beiden Mikrorechner des Duplex-Steuergeräts die Aufgabe übernehmen, soweit eine Plausibilitätsprüfung vorher durchgeführt wurde.

Die doppelt ausgelegten Steuergeräte sind direkt oder über den Datenbus mit Aktuatoren verbunden, die gesteuert werden müssen. Dazu können die Steuergeräte verschiedene Funktionslevel einnehmen. Dazu gehören Funktionen für die Eingabeebene (Command-Level) mit Interaktionen über ein Human Machine Interface, beispielsweise über ein an den Datenbus angeschlossenen Laptop zur Eingabe von neuen Steuerbefehlen. In einem anderen Funktionslevel arbeiten die Steuergeräte als Embeded System, ohne separaten Kommunikationszugang über ein Human Machine Interface, wobei lediglich Steuerinformationen über den Datenbus an die Steuergeräte übermittelt werden. Die doppelt ausgelegten Steuergeräte sind über das Datenbussystem mit den jeweiligen sicherheitsrelevanten Antriebsaggregaten, wie Motor-, Getriebe- oder Lenksystemen verbunden.

Die Software-Architektur der doppelt ausgelegten Steuergeräte trennt Regelungsfunktionen von Kommunikationsfunktionen durch klar definierte Schnittstellen. Im Command-Level werden Bedienfunktionen für die Eingabeeinheit bereitgestellt. Dazu gehören Kommandos wie Fahrer überwachen, Fahrer informieren, Fahrer warnen und der aktive Eingriff in einzelne Systemfunktionen. Assistenzsysteme übernehmen die Datenaufnahme zur Erstellung einer Umgebungsrepräsentation für die Steuergeräte. Dazu besitzen die Assistenzsysteme zunächst einfache oder auch doppelt ausgelegte Sensoren, die fehlersicherer sind. Aus der Umgebungsrepräsentation, d. h. Fahrdaten, Straßendaten und Eingabedaten durch den Fahrer, berechnen die doppelt ausgelegten Steuergeräte die Reaktion des Antriebsstrangs innerhalb dessen momentan zur Verfügung stehenden Leistungsbereichs.

Bei einer vorteilhaften Weiterbildung der Erfindung ist ein bzgl. der Steuerungsaufgabe wirkendes Master-Steuergerät vorgesehen, welches bei einem fehlerfreien Ablauf der Steuerungsaufgabe ausführt und wobei das Entscheidungsmittel die Steuerungsaufgabe im Fehlerfall auf das andere Steuergerät überträgt. Das Datenbussystem weist bzgl. einer Steuerungsaufgabe zwei voneinander unabhängige Steuergeräte mit jeweils zwei voneinander unabhängig arbeitenden Mikrorechnern auf. Die Arbeitsspeicher der vier Mikrorechner weisen zu einer ersten und einer zweiten sicherheitsrelevanten Steuerungsaufgabe jeweils die notwendige Software auf. Bei einem Ausfall eines Steuergeräts kann dann die Steuerungsaufgabe durch das andere Steuergerät mit übernommen werden. Innerhalb jedes Steuergeräts sind zwei Mikrorechner vorhanden, mit einer zwischen die beiden Mikrorechner geschalteten Datenschnittstelle, über die die aus den sicherheitsrelevanten Steuernachrichten berechneten Ergebnisdaten austauschbar und miteinander vergleichbar sind. Ein Entscheidungsmittel entscheidet dann aufgrund des Vergleichs der Ergebnisdaten, welcher Mikrorechner bzw. welches Steuergerät eine Steuerungsaufgabe durchführt.

Das Datenbussystem ist auf diese Weise mehrfach redundant. Bezogen auf eine Steuerungsaufgabe sind immer ein Master-Steuergerät und ein untergeordnetes Steuergerät mit der notwendigen Steuerungssoftware versehen. Bei ordnungsgemäßem Betrieb des Datenbussystems übernimmt der Master die Steuerungsaufgabe beispielsweise für den Motor. Die Nachrichten und Daten der Motorsensoren werden über beide Datenbusse jeweils in den dafür vorgesehenen Zeitschlitzen zum Master-Steuergerät übertragen. Die Steuerdaten werden innerhalb des Master-Steuergeräts jeweils unabhängig auf den beiden Mikrorechnern berechnet. Bei gleichlautenden Ergebnisdaten wird dann ein ordnungsgemäßer Betrieb des Motorsteuergeräts festgestellt und einer der Mikrorechner oder auch beide Mikrorechner berechnen neue Steuersignale und diese werden über die beiden Datenbusse zurück an die Aktuatoren im Motor, beispielsweise die Zündung, Einspritzmittel usw., zurück übertragen. Unterscheiden sich jedoch die beiden berechneten Ergebnisdaten im Master-Steuergerät, so beauftragt das Entscheidungsmittel entweder über den Datenbus oder eine separate Datenleitung das untergeordnete Steuergerät mit der Berechnung der Steuerungsaufgaben für den Motor. Das untergeordnete Steuergerät hat dazu die Motorsteuerdaten auf dem Datenbus auch zuvor schon empfangen und gespeichert, so dass nun die Berechnung der Steuerungsdaten ohne Zeitverzug anlaufen kann. Auf diese Weise ist gewährleistet, dass bei sicherheitskritischen Anwendungen im Verkehrsmittel die Steuerung und Kommunikation auf dem Datenbussystem auch bei auftretenden Fehlern ohne Zeitverzug weitergeführt werden kann. Dadurch entsteht ein fehlersicheres Datenbussystem bezogen auf die dafür vorgesehenen Steuerungsaufgaben, beispielsweise des Motors, des Getriebes oder der elektrischen Lenksysteme.

Die sicherheitskritischen doppelt ausgelegten Steuergeräte beinhalten ein zentrales Datenmanagement, durch welches die Systemeigenschaften des gesamten Fahrzeugs zu jedem Zeitpunkt bekannt sind. Hierbei wird das System durch ein spezielles Redundanz-Management unterstützt, welches im Entscheidungsmittel abgelegt ist. Dadurch können die Steuergeräte durch die zentrale Datenverwaltung einfach konfiguriert und gewartet werden. Sicherheitsabfragen zum Datenbussystem werden innerhalb eines der doppelt ausgelegten Steuergeräte durchgeführt und aufgrund dieser Informationen können Plausibilitätsberechnungen durchgeführt werden. Dadurch ist zu jedem Zeitpunkt bekannt, bei welchem der Steuergeräte ein Fehler aufgetreten ist und welches der Steuergeräte auf eines der untergeordneten Steuergeräte zur Fehlerbehebung umgeschaltet hat.

Die doppelt ausgelegten Steuergeräte können über ein geeignetes Wake-Up-Signal die angeschlossenen Subsysteme kontrolliert aktivieren und deaktivieren. Das System kann permanent mit einigen oder allen Subsystemen des Masters, d. h. den Sensoren, Aktuatoren und untergeordneten Steuergeräten, agieren und deren Systemzustand erkennen. Hierdurch können Fehler im Datenbussystem erkannt und entsprechend überwunden werden. Das Wake-Up-Signal wird über das Entscheidungsmittel an die zugeordneten Sensoren, Aktuatoren oder untergeordneten Steuergeräte übertragen, um im Fehlerfall von einem defekten Subsystem auf ein anderes Subsystem umschalten zu können. Bevorzugt ist pro Steuerungsaufgabe und pro Mikrorechner eines Master-Steuergeräts ein Sensor jeweils an einem der Datenbusse angekoppelt. Durch die doppelte Auslegung können gerade sicherheitskritische Sensoren besser auf deren Funktion überprüft werden. Im Fehlerfall kann dann auf einen Sensor umgeschaltet werden, der innerhalb des vorgesehenen Plausibilitätsbereichs Daten liefert. Ist die Entscheidung, welcher Sensor ordnungsgemäß funktioniert nicht möglich, so wird gegebenenfalls auf ein untergeordnetes Steuergerät mit einem weiteren Sensor umgeschaltet. Dadurch lassen sich dann neue und unabhängige Berechnungen innerhalb kurzer Zeit durchführen, um bei sicherheitskritischen Anwendungen keinen Systemausfall zu erzeugen.

Bei einer Weiterbildung der Erfindung kann das redundante Datenbussystem zwei spezielle, voneinander unabhängige Datenbusse vorsehen. Jeder Datenbus weist dabei wieder zwei eigene Busleitungen auf, wobei auf diesen ein zeitgetriggertes Datenbusprotokoll abläuft. Auf diese Weise kommen dann Datenbusse zum Einsatz, wie diese auch heute schon im Verkehrsmittel verbaut sind. Beispielsweise ist der Zweileiter-CAN-Datenbus oder ein Zweileiter-FlexRay-Datenbus im Verkehrsmittel so verlegt, dass ein erster Datenbus an der linken Seite des Verkehrsmittels und ein zweiter Datenbus mit den beiden Datenleitungen an der rechten Seite des Verkehrsmittels eingebaut ist. Andererseits kann auch ein Datenbus im Bereich des Fahrzeughimmels und der andere Datenbus im Bereich der Bodengruppen verlegt sein und auf diese Weise als redundantes Datenbussystem dienen.

Bevorzugt weist jeder Mikrorechner die Steuerungssoftware aller sicherheitsrelevanten Steueraufgaben auf, so dass auf jedem Steuergerät die Gesamtinformation aller sicherheitsrelevanten Steuerungsaufgaben vorgesehen ist. Dadurch kann jedes Steuergerät im Fehlerfall auch als Vertreter für das jeweilige Master-Steuergerät bei jeder beliebigen Steuerungsaufgabe auftreten. Bei der Konfiguration des Verkehrsmittels wird dann bestimmt, welche sicherheitsrelevanten Funktionen durch ein bestimmtes Steuergerät vertreten werden darf. Auf diese Weise sind in den sicherheitsrelevanten Steuergeräten bzgl. der Anwendungssoftware gleiche Softwaresysteme aufgespielt.

Die Software auf den doppelt ausgelegten Steuergeräten ist zumindest für den Antriebsstrang als fehlertolerante Software programmiert und übernimmt die Steuerung bzw. Koordination der Funktionen der Motor- und Getriebeaggregate. Die Steuergeräte sind in der Lage, Daten der verschiedenen Sensoren zu erfassen und zu einem einheitlichen Datensatz zu integrieren. Für diesen Datensatz ist das Format von vornherein vorgegeben. Auf diese Weise werden die Daten im Datenbussystem gesammelt und zu jedem Zeitpunkt aktuell gehalten. Aufgrund dieses Datensatzes können dann die Steuergeräte erkennen, ob Fehler im System aufgetreten sind oder ob die Steuergeräte, Sensoren und Aktuatoren bei den sicherheitskritischen Aufgaben ordnungsgemäß arbeiten.

Der Datensatz ist derart aufgebaut, dass eine Datenfusion bei den Daten der unterschiedlichen Sensoren erfolgen kann. Dazu kann eine Datenfusion bei den Assistenzsystemen, beispielsweise den Kamera-Sensoren, den Radar- und GPS-Sensoren erfolgen, oder es werden die Daten der unterschiedlichen Eingabeschnittstellen im Datensatz abgespeichert, d. h. Daten vom Gaspedal, der Bremse und Lenkungseingaben werden erfasst. Das Datenmanagement der Steuergeräte übernimmt Koordinationsfunktionen der Einzelkomponenten untereinander. Beispielsweise Bremsen, Lenken und Motorfunktionen werden aufeinander abgestimmt und in Bezug auf Fehler überprüft. Aufgrund des Datensatzes lässt sich auch ein Energiemanagement durch die ganzheitliche und zeitnahe Datenverfügbarkeit erstellen. Auf diese Weise sind im Gesamtfahrzeug die Energieressourcen bekannt und es können beispielsweise beim Hybridantrieb auf einfache Weise die Systeme des Elektromotors und die eines herkömmlichen Ottomotors umgestellt werden. Der Datensatz kann als Nachricht über das Datenbussystem an alle dafür vorgesehenen sicherheitskritischen Steuergeräte übertragen werden, so dass jedes der Steuergeräte eine aktuelle Momentanansicht der unterschiedlichen Steueraufgaben hat.

Es gibt nun verschiedene Möglichkeiten, die Lehre der vorliegenden Erfindung in vorteilhafter Weise auszugestalten und weiterzubilden. Dazu ist einerseits auf die untergeordneten Ansprüche und andererseits auf die nachfolgende Erläuterung einer Ausführungsform zu verweisen. In der Zeichnung ist eine Ausführungsform des erfindungsgemäßen Datenbussystems dargestellt.

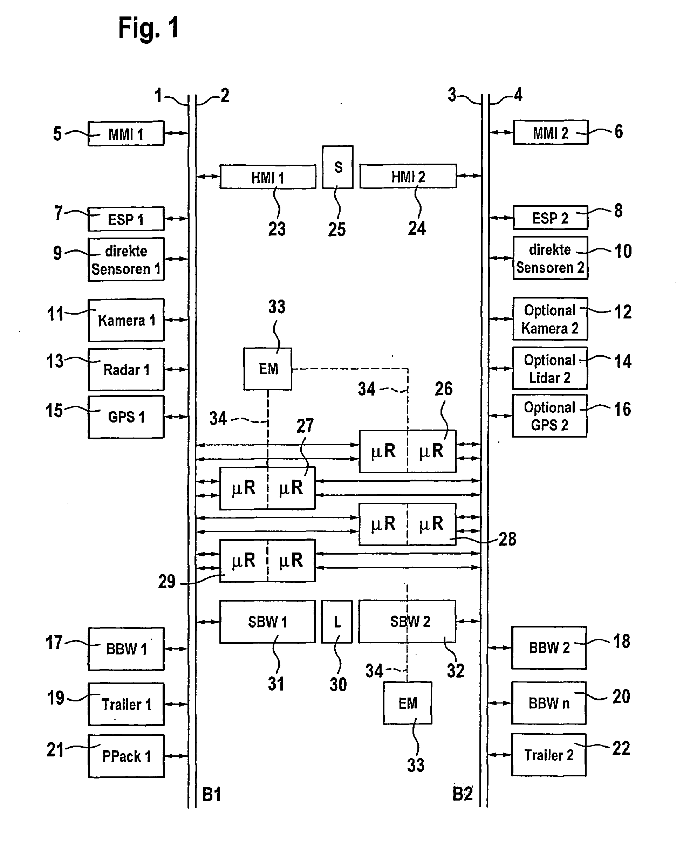

- Fig.1: zeigt eine schematische Ansicht der Systemarchitektur des Datenbussystems gemäß der vorliegenden Erfindung.

Das Datenbussystem ist redundant ausgelegt, indem ein erster Datenbus B1 und ein zweiter Datenbus B2 vorgesehen sind. Die beiden Datenbusse B1 und B2 sind beispielsweise FlexRay-Datenbusse, die bei derselben oder ähnlicher Übertragungsfrequenz arbeiten und dasselbe Nachrichtenprotokoll aufweisen, wobei die den sicherheitsrelevanten Komponenten zugeordneten Zeitschlitze entsprechend der Busarchitektur variieren können. Jeder Datenbus B1 bzw. B2 weist für sich wieder zwei Datenbusleitungen 1, 2 beim Datenbus B1 und die Datenbusleitungen 3, 4 beim Datenbus B2 auf. An die beiden Datenbusse B1 und B2 sind unterschiedliche Komponenten, wie Sensoren, Aktuatoren oder Steuergeräte angeschlossen. Je nachdem, ob die Funktion im Fahrzeug, beispielsweise einem Automobil oder einem Nutzfahrzeug, sicherheitskritisch ist, sind die Komponenten entweder nur an einem Datenbus B1, B2 oder zwischen beiden Datenbussen angeordnet, so dass Nachrichten von beiden Datenbussen B1, B2 empfangen und verglichen werden können.

Am Datenbus B1 ist ein elektronisches Steuergerät 5 als Man-Machine-Interface angeschlossen, das die Bedien- und Anzeigeelemente im Fahrzeug steuert. Nachrichten für die Bedieneinheiten und für die Anzeige, beispielsweise ein Kombiinstrument können über B1 gesendet oder empfangen werden. Dazu weist das Steuergerät 5 einen Transceiver auf, der die Datenbusnachrichten senden und empfangen kann. Am Datenbus B2 hängt ein weiteres Steuergerät 6, das eine andere Bedien-/Anzeigeeinheit steuert und welches die Nachrichtenübertragung über den Datenbus B2 durchführt. Die Datenbusse B1 und B2 können derart aufgebaut sein, dass ein separater Zeitschlitz für das Steuergerät 5 und für das Steuergerät 6 vorgesehen sind und dass die Datenbusprotokolle auf beiden Datenbussen B1, B2 identisch sind, wobei eine Nachricht des Steuergeräts 5 dann in dem dafür vorgesehenen Zeitschlitz des Datenbusses B1 übertragen wird, während in diesem Zeitschlitz des Datenbusses B2 keine Übertragung stattfindet, da das Steuergerät 5 dort nicht angeschlossen ist. Im Gegensatz dazu wird dann eine Nachricht vom Steuergerät 6 in dem dafür vorgesehenen Zeitschlitz auf den Datenbus B2 übertragen, während der Zeitschlitz auf dem Datenbus B1 frei bleibt. Andererseits können die Datenbusprotokolle aber auch genau auf die Busteilnehmer angepasst sein, so dass sich die Reihenfolge der Zeitschlitze und die zugehörenden Komponenten auf beiden Datenbussystemen B1 bzw. B2 unterscheiden.

Sensoren 7 und 8 zur Bestimmung der Gierrate des Fahrzeugs sind jeweils mit einem der Datenbusse B1 bzw. B2 verbunden und legen die gemessenen Sensorwerte auf den jeweiligen Datenbus B1 bzw. B2. Die ESP-Sensoren 9 und 10 erfassen bestimmte Messgrößen am Fahrzeug und werden jeweils über den angekoppelten Datenbus B1 bzw. B2 eingelesen, so dass die Sensorwerte den Steuergeräten zu Zwecken der Weiterverarbeitung zur Verfügung stehen. Auf diese Weise sind die Sensorwerte am Datenbus leicht diagnostizierbar und auslesbar.
Ein Kamerasystem 11 ist am Datenbus B1 angeschlossen und liefert Aufnahmen oder auch schon zugeordnete Objekttypen bzw. Objektlisten von der Fahrzeugumgebung. Die Bilder oder Daten werden für die Datenfusion benötigt und beispielsweise mit Daten der Radar-Sensoren 13 oder Lidar-Sensoren 14 verglichen, geprüft oder zusammen verarbeitet. Die Assistenzsysteme der Kameras 11, 12 sind mit verschiedenen Softwarefunktionen gekoppelt, um eine Fußgängererkennung oder eine Fahrzeugerkennung zur Vermeidung eines Unfalls durchzuführen. Da diese Sensoren 13, 14 und Komponenten 11, 12 als Assistenzsysteme den Fahrer unterstützen, werden diese nicht als sicherheitskritische Anwendungen betrachtet. Infolgedessen reicht es aus, eine Datenübertragung über einen einzelnen Datenbus B1 bzw. B2 durchzuführen. Bei einem Ausfall der Sensorik 13, 14 wird im Fahrzeug eine Warnlampe angehen, um den Ausfall der Komponente anzuzeigen. Ein Ausfall des Gesamtfahrzeugs oder des gesamten Datenbussystems ist dadurch nicht gegeben, so dass hier keine redundante Auslegung oder große Fehlertoleranz erforderlich ist. Eine Fehlererkennung kann natürlich in der jeweiligen Komponente selbst mittels Software umgesetzt sein.

Zur Lokalisierung des Fahrzeugs sind GPS-Komponenten 15 und 16 an den jeweiligen Datenbussen B1 bzw. B2 angeschlossen, die mittels der vorhandenen Software ein Geometriemodell der aktuellen Umgebung des Fahrzeugs nachbilden und die genaue Position des Fahrzeugs anzeigen können. Die Ergebnisdaten der GPS-Komponenten 15 und 16 werden als Nachrichten auf dem Datenbus B1, B2 abgelegt und können daher durch Steuergeräte bei deren jeweiligen Funktionen verwendet werden.

Brems-Komponenten 17, 18, 20 sind jeweils an einem Datenbus B1, B2 vorgesehen, um den Bremszylinder anzusteuern oder Bremswerte zu erfassen. Die Komponenten 17, 18, 20 sind als Simplex-Komponenten jeweils an einem Rad angeordnet und steuern Motoren oder Pneumatik- bzw. Hydraulik-Komponenten des Bremssystems an. Über diese Komponenten 17, 18, 20 kann das Bremsverhalten des Fahrzeugs nach bestimmten Vorgaben beeinflusst werden. Fällt eine Bremseinheit 17, 18, 20 aus, wird dies über Sensoren und den jeweiligen Datenbus B1 bzw. B2 erkannt und es kann durch ein Steuergerät dann die jeweils andere Bremseinheit, beispielsweise Bremskomponente 20 statt der ursprünglichen Bremskomponente 17, eingesetzt werden. Das Aktivieren und Deaktivieren derartiger Brems-Komponenten 17, 18, 20 wird dann durch ein zugeordnetes Bremssteuergerät erfolgen.

Schließlich sind noch Steuergeräte zur Ansteuerung von Komponenten im Anhänger in Form der Komponenten 19, 21 und 22 vorhanden. Diese Komponenten 19, 21, 22 steuern das Bremssystem bzw. die Luftfederung oder ähnliche Einheiten im Anhänger. Fällt eine dieser Sendeeinheiten aus, wird dies über die Sensoren und den jeweiligen Datenbus B1 bzw. B2 erkannt und es übernimmt eine andere Sendeeinheit die Funktion, nach dem das zugeordnete Steuergerät und dessen Entscheidungsmittel 33 den Ausfall erkannt haben. Das Entscheidungsmittel kann Bestandteil eines Steuergerätes sein oder als separate Schaltung oder Software vorgesehen sein.

Neben diesen jeweils nur einem Datenbus B1 bzw. B2 zugeordneten Komponenten wie Sensoren, Aktuatoren oder auch einfachere Steuergeräte, welche nicht fehlersicher sein müssen, sind erfindungsgemäß doppelt ausgelegte Komponenten bzw. doppelt ausgelegte Steuergeräte so geschaltet, dass sie jeweils einen Transceiver zum Datenbus B1 und einen weiteren Transceiver zum Datenbus B2 aufweisen, so dass sie mit beiden Datenbussen B1 bzw. B2 kommunizieren können.

Die Elektromotoren 23 und 24 sind mit einer intelligenten Steuerfunktion versehen und doppelt ausgeführt. Der Elektromotor 23 ist beispielsweise mit einer Handbedienfunktion, beispielsweise einem Sidestick zur Steuerung des Fahrzeugs versehen, während der Elektromotor 24 mit der Pedalbox verbunden ist, um die Fußbetätigung des Fahrers zu steuern, zu beeinflussen oder zu erfassen. Fällt eine der Motoreinheiten 23, 24 aus, wird dies erkannt und die Funktion wird direkt durch einen zweiten Elektromotor übernommen. Im Beispiel ist der Sidestick 25 mit den beiden Elektromotoren 23 und 24 gekoppelt, wobei die Masterfunktion durch den Elektromotor 23 übernommen wird, d. h. ohne Fehler und standardmäßig wird der Sidestick durch den Elektromotor 23 angesteuert. Im Fehlerfall, wenn die über die Datenbusse B1 bzw. B2 in den Steuereinheiten der Elektromotoren 23 und 24 verarbeiteten Werte nicht übereinstimmen, wird ein Entscheidungsmittel 33 die Aufgabe des Elektromotors 23 auf den Elektromotor 24 verlagern, so dass dieser mit dem Sidestick 25 zusammenwirken kann. Aufgrund dieser Funktion besteht eine hohe Fehlersicherheit für den Sidestick 25, bei dessen Ausfall das Fahrzeug gegebenenfalls einen Unfall erzeugen würde. Innerhalb von Millisekunden kann nach Erkennung eines Fehlers umgeschaltet werden, so dass die Masterfunktion durch den Elektromotor 24 übernommen wird. Gleichzeitig wird der Fehler dem Fahrer signalisiert, so dass er den Fehler beheben kann.

Auch die Steuergeräte 26 bis 29 sind gleichzeitig an beide Datenbusse B1 bzw. B2 angekoppelt. Die Steuergeräte 26 bis 29 können im Fahrzeug unterschiedliche Funktionen übernehmen, beispielsweise die Komponenten im Innenraum steuern, Motorkomponenten ansteuern, die Lenkung steuern oder auch andere sicherheitskritische Funktionen übernehmen. Jedes dieser Steuergeräte 26 bis 29 weist zwei Mikrorechner auf. Zwischen den beiden Mikrorechnern besteht eine Schnittstelle, an der die über den Datenbus B1 eingehenden Nachrichten bzw. die daraus berechneten Daten des ersten Mikrorechners µR verglichen werden mit denen aus den Nachrichten des Datenbusses B2 stammenden bzw. berechneten Ergebnisdaten des zweiten Mikrorechners µR. Mit der Schnittstelle verbunden ist ein Entscheidungsmittel 33. Das Entscheidungsmittel 33 kann beispielsweise als Watchdog ausgeführt sein, welcher die ordnungsgemäße Funktion der beiden Mikrorechner µR überprüft und deren Daten vergleicht. Das Entscheidungsmittel kann auch Bestandteil eines Steuergerätes sein oder als separate Schaltung oder Software vorgesehen sein. Im Fehlerfall, d. h. wenn die berechneten Ergebnisdaten des einen Mikrorechners µR von denen des anderen Mikrorechners µR abweichen, erkennt das Entscheidungsmittel 33 einen Fehler und je nach Diagnose wird das Entscheidungsmittel 33 die Funktionen des Steuergeräts, beispielsweise des Steuergeräts 26, auf ein Ersatzsteuergerät 27 übergeben, so dass die Steuerungsaufgaben dann im Ersatzsteuergerät 27 erfolgen können, während das Steuergerät 26 gestört ist. Das Entscheidungsmittel 33 kann aber einen Fehler auch erkennen, wenn eine Nachricht im Zeitschlitz ausbleibt oder sich aufeinander folgende Nachrichten auf demselben Datenbus unterscheiden. Je nach Fehlerroutine schaltet sich dann ein Steuergerät selbst ab oder übernimmt die Aufgaben von einer anderen Komponente.

Es kann aber auch vorgesehen sein, dass lediglich die Ergebnisdaten eines der beiden Mikrorechner µR des Steuergeräts 26 nach einer Plausibilitätsprüfung weiter verwendet werden und das Vergleichen der Ergebnisdaten für eine vorgegebene Zeit unterbleibt, da das System nach Überprüfung des Wertebereichs davon ausgeht, dass ein Mikrorechner µR oder dessen Sensorik gestört ist. Zur Ansteuerung der Lenkung 30 sind wiederum zwei Elektromotoren 31 und 32 vorgesehen, die elektrisch, hydraulisch oder pneumatisch in das Lenkgestänge des Verkehrsmittels eingreifen können. Dadurch kann das Lenkverhalten des Fahrzeugs verändert werden. Fällt eine dieser Lenkeinheiten aus, wird dies über Sensoren erkannt und das Steuergerät 31 übergibt die Steuerungsfunktionen auf das Ersatzsteuergerät 32. Gegebenenfalls kann aber auch die Steuerfunktion auf eines der anderen Steuergeräte 26 bis 29 übergeben werden, die die gesamte relevante Steuerungssoftware von vornherein aufgespielt haben, so dass die Steuerungsfunktionen im Fehlerfall auch von den Steuergeräten 26 bis 29 ausgeführt werden können.

Durch die Anbindung der sicherheitsrelevanten Steuergeräte, Aktuatoren und Sensoren 23 bis 32 an beide Datenbusse B1 und B2 können die Nachrichten auf den beiden Datenbussystemen und die daraus berechneten Ergebnisdaten im jeweiligen Steuergerät 23 bis 32 miteinander verglichen werden. Das erfindungsgemäße Konzept sieht vor, dass im Wesentlichen die gleiche Hardware und im Wesentlichen die gleiche Software auf den Mikrorechnern µR im Steuergerät zweimal vorgesehen ist und auf diese Weise das Ergebnis aus den Nachrichten doppelt, d. h. redundant, berechnet wird. Im fehlerfreien Fall entstehen dadurch gleiche Ergebnisdaten aufgrund einer Berechnung aus den Nachrichten des jeweiligen Datenbusses B1 bzw. B2. Falls sich die Ergebnisdaten unterscheiden, wird auf einfache Weise erkannt, dass im Datenbussystem ein Fehler vorliegt. Ein Entscheidungsmittel 33 wird dann entsprechend einer vorgegebenen Fehlerbehandlungsroutine die Steuerungsaufgabe auf ein anderes Steuergerät oder einen anderen Mikrorechner µR verteilen. Bevorzugt sind innerhalb der Steuergeräte 23 bis 32 zwei Mikroprozessoren µR vorhanden, die jeweils die Berechnungsaufgabe durchführen. Auf diese Weise kann gewährleistet werden, dass die berechneten Daten im Idealfall den gleichen Wert einnehmen, soweit kein Fehler vorliegt. Auch können die Mikroprozessoren µR dann noch weitere Aufgaben übernehmen, die nicht fehlerkritisch sind. Dadurch können neben den fehlersicheren Aufgaben jedes Steuergeräts 23 bis 32 auch andere Funktionen durchgeführt werden, wobei nicht ein Vergleich auf beiden Mikrorechnern µR erforderlich wird.

## Patentansprüche

1. Redundantes Datenbussystem mit zwei Datenbussen (B1, B2), zwischen denen mindestens zwei fehlersichere Steuergeräte (26 bis 32) angekoppelt sind, wobei beide Datenbusse (B1, B2) vom gleichen Datenbustyp (FlexRay, CAN) sind, sicherheitsrelevante Steuernachrichten übertragen und in den Steuergeräten (26 bis 32) verarbeitet werden, wobei jedes der Steuergeräte (23 bis 32) eine eigene Steuerungsaufgabe erfüllt, die über eine zugeordnete Steuerungssoftware abgearbeitet wird und in jedem Steuergerät (26 bis 32) zwei voneinander unabhängig arbeitende Mikrorechner (µR) vorgesehen sind,
**dadurch gekennzeichnet, dass** die sowohl die Steuerungssoftware der ersten als auch der zweiten Steuerungsaufgabe aufweisen, so dass beim Ausfall eines Steuergeräts (26 bis 32) die Steuerungsaufgabe durch das andere Steuergerät (26, 27, 28 bzw. 29) mit übernommen werden kann und dass jeweils eine Datenschnittstelle (34) im Steuergerät zwischen den beiden Mikrorechnern (µR) angeordnet ist, über die die aus den sicherheitsrelevanten Steuernachrichten berechneten Ergebnisdaten austauschbar und miteinander vergleichbar sind und dass ein Entscheidungsmittel (33) vorgesehen ist, das aufgrund des Vergleichs der Ergebnisdaten entscheidet, welcher Mikrorechner (µR) bzw. welches Steuergerät (26 bis 32) eine Steuerungsaufgabe durchführt, und dass die beiden Datenbusse (B1, B2) sicherheitsrelevante Steuernachrichten über beide Datenbusse (B1, B2) parallel übertragen.

2. Datenbussystem nach Anspruch 1, **dadurch gekennzeichnet, dass** ein Steuergerät (26 bis 32) bzgl. einer Steuerungsaufgabe als Master-Steuergerät vorgesehen ist, welches bei fehlerfreiem Ablauf der Steuerungsaufgabe diese ausführt, wobei durch das Entscheidungsmittel (33) die Steuerungsaufgabe im Fehlerfall auf das andere Steuergerät (27 bis 29) übertragen wird.

3. Datenbussystem nach Anspruch 1 oder 2, **dadurch gekennzeichnet, dass** pro Steuerungsaufgabe und pro Mikrorechner (µR) an einem der Datenbusse (B1, B2) angekoppelt ist.

4. Datenbussystem nach einem der Ansprüche 1 bis 3, **dadurch gekennzeichnet, dass** das redundante Datenbussystem zwei voneinander unabhängige Datenbusse (B1, B2) mit jeweils zwei Busleitungen (1, 2 bzw. 3, 4) aufweist, so dass den Zeitschlitzen auf dem Datenbus (B1, B2) jeweils eine eindeutiger Nachrichtenempfänger (Transceiver) zugeordnet ist.

5. Datenbussystem nach einem der Ansprüche 1 bis 4, **dadurch gekennzeichnet, dass** jeder Mikrorechner (µR) die Steuerungssoftware aller sicherheitsrelevanten Steuerungsaufgaben aufweist, so dass auf jedem Steuergerät (26 bis 32) die Gesamtinformation aller sicherheitsrelevanten Steuerungsaufgaben vorgesehen ist.

6. Datenbussystem nach einem der Ansprüche 1 bis 5, **dadurch gekennzeichnet, dass** die beiden Datenbusse das gleiche Busprotokoll aufweisen, wobei die Verteilung der Zeitschlitze variabel ist, entsprechend der am jeweiligen Datenbus angeschlossenen Komponenten.

## Claims

1. A redundant data bus system comprising two data buses (B1, B2) between which at least two failsafe control devices (26 to 32) are connected, the two data buses (B1, B2) being of the same data bus type (FlexRay, CAN), safety-related control messages being transmitted and being processed in the control devices (26 to 32), each of the control devices (23 to 32) carrying out a separate control task which is processed by means of assigned control software and two microcomputers (µR) which operate independently of one another being provided in each control device (26 to 32), **characterized in that** they have the control software for both the first and the second control tasks so that when one control device (26 to 32) fails the control task can also be carried out by the other control device (26, 27, 28 or 29), and **in that** in each case one data interface (34) is arranged in the control device between the two microcomputers (µR) via which the result data items which are calculated on the basis of the safety-related control messages can be exchanged and compared with one another, and **in that** a decision means (33) is provided which decides, on the basis of the comparison of the result data items, which microcomputer (µR) or which control device (26 to 32) carries out a control task, and **in that** the two data buses (B1, B2) transmit safety-related control messages in parallel via both data buses (B1, B2).

2. The data bus system as claimed in claim 1, **characterized in that** a control device (26 to 32) task is provided as a master control device for a control and it carries out the control task when said control task's sequence runs free of faults, wherein, in the case of a fault, the decision means (33) transfers the control task to the other control device (27 to 29).

3. The data bus system as claimed in claim 1 or 2, **characterized in that** connection to one of the data buses (B1, B2) occurs for each control task and for each microcomputer (µR).

4. The data bus system as claimed in one of claims 1 to 3, **characterized in that** the redundant data bus system has two data buses (B1, B2) which are independent of one another and each have two bus lines (1, 2, and 3, 4) so that in each case a uniquely defined message receiver (transceiver) is assigned to the time slots on the data bus (B1, B2).

5. The data bus system according to one of claims 1 to 4, **characterized in that** each microcomputer (µR) has the control software for all the safety-related control tasks so that all the information for all the safety-related control tasks is provided on each control device (26 to 32).

6. The data bus system as claimed in one of claims 1 to 5, **characterized in that** the two data buses have the same bus protocol, the distribution of time slots being variable depending on the components connected to the respective data bus.

## Revendications

1. Système redondant de bus de données avec deux bus de données (B1, B2), entre lesquels au moins deux appareils de commande avec protection contre les erreurs (26 à 32) sont couplés, les deux bus de données (B1, B2) étant du même type de bus de données (FlexRay, Can), des messages de commande relatifs à la sécurité étant transmis et traités dans les appareils de commande (26 à 32), chacun des appareils de commande (23 à 32) remplissant une tâche de commande précise, laquelle est traitée par un logiciel de commande affecté et, dans chaque appareil de commande (26 à 32), deux microordinateurs (µR) fonctionnant indépendamment l'un de l'autre étant prévus,
**caractérisé en ce qu'**ils comportent aussi bien le logiciel de commande de la première tâche de commande que de la seconde tâche de commande, de sorte qu'en cas de panne d'un appareil de commande (26 à 32), la tâche de commande peut être reprise par l'autre appareil de commande (26, 27, 28 et/ou 29), **en ce qu'**une interface de données (34) respective est disposée dans l'appareil de commande entre les deux microordinateurs (µR), interface via laquelle les données de résultat calculées à partir des messages de commande relatifs à la sécurité peuvent être comparés les uns avec les autres et échangés, **en ce qu'**un moyen de décision (33) est prévu, lequel décide, en fonction de la comparaison des données de résultat, quel microordinateur (µR) ou quel appareil de commande (26 à 32) exécute une tâche de commande et **en ce que** les deux bus de données (B1, B2) communiquent parallèlement les messages de commande relatifs à la sécurité via les deux bus de données (B1, B2).

2. Système de bus de données selon la revendication 1, **caractérisé en ce qu'**un appareil de commande (26 à 32) relatif à une tâche de commande est prévu comme appareil de commande principal, lequel exécute celle-ci en cas de déroulement sans erreur de la tâche de commande, la tâche de commande étant transmise par le moyen de décision (33), en cas d'erreur, à l'autre appareil de commande (27 à 32).

3. Système de bus de données selon la revendication 1 ou 2, **caractérisé en ce qu'**une tâche de commande et un microordinateur (µR) sont couplés à un des bus de données (B1, B2).

4. Système de bus de données selon l'une quelconque des revendications 1 à 3, **caractérisé en ce que** le système redondant de bus de données comporte deux bus de données (B1, B2) indépendants l'un de l'autre avec respectivement deux câbles de bus (1, 2 et/ou 3, 4), de sorte qu'un récepteur de message (récepteur-émetteur) univoque est affecté aux intervalles temporels sur le bus de données (B1, B2).

5. Système de bus de données selon l'une quelconque des revendications 1 à 4, **caractérisé en ce que** chaque microordinateur (µR) comporte le logiciel de commande de toutes les tâches de commande relatives à la sécurité, de sorte que toutes les informations de toutes les tâches de commande relatives à la sécurité sont prévues sur chaque appareil de commande (26 à 32).

6. Système de bus de données selon les revendications 1 à 5, **caractérisé en ce que** les deux bus de données présentent le même protocole de bus, la répartition des intervalles temporels étant variable, selon les composants raccordés au bus correspondant.
